Europäisches Patentamt

European Patent Office

Office européen des brevets

(11) Veröffentlichungsnummer: **0 191 295**
A2

## (12) EUROPÄISCHE PATENTANMELDUNG

(21) Anmeldenummer: 86100245.9

(22) Anmeldetag: 09.01.86

(51) Int. Cl.⁴: **H 02 G 1/02, H 02 G 7/08**

(30) Priorität: 13.02.85 DE 3504959

(43) Veröffentlichungstag der Anmeldung: 20.08.86
Patentblatt 86/34

(84) Benannte Vertragsstaaten: **AT CH DE FR GB IT LI**

(71) Anmelder: **Siemens Aktiengesellschaft Berlin und München, Wittelsbacherplatz 2, D-8000 München 2 (DE)**

(72) Erfinder: **Goldmann, Horst, Dipl.-Ing., Almersweg 12a, D-8031 Gilching (DE)**
Erfinder: **Einsle, Günter, Hofbrunnstrasse 52, D-8000 München 71 (DE)**
Erfinder: **Brugger, Rudolf, Dipl.-Ing., Münchnerstrasse 17d, D-8039 Puchheim (DE)**
Erfinder: **Wacker, Josef, Dipl.-Ing., Kirchanger 1, D-8137 Höhenrain (DE)**

(54) Vorrichtung zum Anbringen von Kabeln an Tragseilen.

(57) Die Erfindung betrifft eine Vorrichtung (1) zum Anbringen von Kabeln (23) an Tragseilen (22), wobei die Vorrichtung (1) auf dem Tragseil (22) verfahrbar ist und bandförmige Befestigungsmittel (19) mitführt, die in einzelne Anschellelemente (20) abgetrennt werden. An die Kombination Tragseil/Kabel (22-23) werden die Anschellelemente (20) mit Hilfe einer Falzvorrichtung (4) angeprägt. Ein Doppelriemenantrieb (3), der kraftschlüssig am Tragseil (22) entlanggeführt wird, sorgt für die Kraftübertragung auf die einzelnen Mechanismen. Mit einer Einhängehilfsvorrichtung (6) kann die Vorrichtung (1) in einfacher Weise auf das Tragseil (22) aufgesetzt werden.

Siemens Aktiengesellschaft
Berlin und München

Unser Zeichen

VPA    85 P 1 0 8 4 E

## Vorrichtung zum Anbringen von Kabeln an Tragseilen.

Die Erfindung betrifft eine Vorrichtung zum Anbringen von Kabeln an Tragseilen, wobei die entlang des Tragseils verfahrbare Vorrichtung einen Vorratsbehälter mit Befestigungsmitteln mitführt, die im Abstand voneinander absetzbar sind und die durch eine Falzvorrichtung aus zu beiden Seiten des Tragseils angeordneten Prägerollen an die miteinander zu verbindende Kombination Tragseil/Kabel anprägbar sind, wobei weiterhin die Befestigungsmittel zunächst bandförmig aneinandergefügt und durch eine Trennvorrichtung, die in einem Zuführungsmodul für die Befestigungsmittel angeordnet ist, in einzelne Anschellelemente teilbar sind.

Eine Vorrichtung der vorgenannten Art ist aus der DE-OS 32 28 227 bekannt. Dort wird durch Führungs- und Andruckrollen ein Führungskanal gebildet, wobei eine Auslösevorrichtung für die Befestigungsmittel oberhalb des in die Vorrichtung eingeführten Tragseiles angeordnet ist. Daraus ergibt sich, daß der Verschluß der Befestigungsmittel unterhalb der miteinander zu verbindenden Kombination Tragseil/Kabel erfolgt. So sind auch alle weiteren für das Falzen erforderlichen Vorrichtungen unterhalb des Tragseils angeordnet.

Für vorliegende Erfindung ergibt sich nun die Aufgabe, eine Vorrichtung zum Anbringen von Kabeln an Tragseilen zu schaffen, mit der ein sicherer Antrieb aller erforderlichen Einzelvorrichtungen gewährleistet ist, wobei neben einfacher Handhabung des Geräts auch eine entsprechend

0191295

lange Lebensdauer der Verschleißteile, insbesondere des Abtrennmechanismus für die Befestigungsmittel, gewährleistet werden muß. Die gestellte Aufgabe wird nun gemäß der Erfindung mit einer Vorrichtung der eingangs erläuterten Art dadurch gelöst, daß die Falzvorrichtung oberhalb des Tragseils angeordnet ist, daß die Falzvorrichtung einen keilförmigen Einlauf für die Anschellelemente aufweist, daß das Zuführungsmodul in der Trennvorrichtung einen Abschermechanismus mit mehreren Meißeln und einer als Widerlager ausgebildeten Gegenrolle aufweist, daß das Zuführungsmodul unterhalb des zu befestigenden Kabels angeordnet ist, daß das Zuführungsmodul freischaltbar ist, daß ein gekoppelter Doppelriemenantrieb für das Zuführungsmodul zu beiden Seiten des Tragseils kraftschlüssig berührend angeordnet ist, daß eine Hebevorrichtung für die Anschellelemente am Ausgang des Zuführungsmoduls angeordnet ist, und daß eine Einhängehilfsvorrichtung angeordnet ist.

An der Vorrichtung gemäß der Erfindung ist nun zum Beispiel von Vorteil, daß es zunächst in einfacher Weise an das Tragseil angehängt werden kann und erst dann durch Anschaltung des Antriebs in Funktion gesetzt wird. Der Antrieb selbst und der davon gesteuerte Arbeitsablauf in den einzelnen Mechanismen läuft jedoch erst dann an, wenn die Vorrichtung auf dem Tragseil entlanggezogen wird. Dies erfolgt zum Beispiel durch ein Zugseil vom Boden aus. Die Bewegung der Vorrichtung könnte jedoch auch drahtlos gesteuert werden, wenn ein fernsteuerbarer Antrieb vorgesehen wird. Der Antrieb kann jedoch auch beliebig bei Bedarf freigesetzt werden, so daß jederzeit ein Freilauf der Vorrichtung erfolgen kann. Diese Maßnahme ist besonders dann wichtig, wenn die Vorrichtung zurückgezogen werden muß, wie zum Beispiel bei einer Flick- bzw. Verbindungsstelle des Tragseils. So kann man dann diese Problemstelle von beiden Seiten her anfahren

0191295
85 P 1084 E

zuführung 7, der Speicherbehälter 5 für Befestigungsmittel 19, das Zuführungsmodul 2, der Doppelriemenantrieb 3, die Falzvorrichtung 4, die Einhängehilfsvorrichtungen 6 und der Freischaltemechanismus 8 in einem
Tragerahmen funktionsgerecht angeordnet sind. Weiterhin
ist die Führung des Tragseils 22 und des daran anzuschellenden Kabels 23, wie auch die teilweise Führung
der Befestigungsmittel 19 aus dem Speicherbehälter 5
in das Zuführungsmodul 2 ersichtlich. Daraus geht hervor,
daß das Tragseil 22, wie auch das Kabel 23 oberhalb des
Zuführungsmoduls 2 und des Doppelriemenantriebs 3 geführt werden, wobei die Einhängehilfsvorrichtungen 6 zum
Aufbringen der gesamten Vorrichtung 1 auf das Tragseil
22 jeweils am Anfang und am Ende der Vorrichtung 1 angeordnet sind. Die Vorrichtung 1 wird mit diesen Einhängehilfsvorrichtungen 6 so ausgerichtet, daß sie mit ihren
Tragrollen 11 auf dem Tragseil 22 hängt und somit hängend fortbewegt werden kann. Weiterhin ist in diesem
Fall eine Hilfsantriebsrolle 10 mit relativ großem Durchmesser zusätzlich zum Doppelriemenantrieb 3 angeordnet,
die mit diesem über ein Getriebe mechanisch gekoppelt
ist, so daß zusätzliche Kraftübertragung erreicht wird.
Im Zuführungsmodul 2 werden die vom Speicherbehälter 5
zugeführten bandförmig zusammenhängenden Befestigungsmittel 19 geführt, in einzelne Anschellelemente 20 abgeteilt und schließlich an den Doppelriemenantrieb 3 weitergeführt. Die Einzelheiten werden anhand detaillierter
Figuren näher erläutert.

Das Zuführungsmodul 2 kann weiterhin durch einen Anschaltemechanismus 9 mit Hilfe eines entsprechenden
Hebelwerkes 16 und eventuell mit Hilfe eines gesteuerten Motors 17 freigeschaltet werden, so daß die Vorrichtung insgesamt im "Freilauf" am Tragseil 22 entlanggezogen werden kann. Die Zuführung der noch bandförmig auf
einem Trommelkern aufgewickelten Befestigungselemente 19

0191295
85 P 1084 E

werden über eine mehrkantflächige Scheibe 21, die sich in synchronisierter Weise zum Ablauf im Zuführungsmodul 2 dreht, gleichmäßig vom Kern 25, der das Profil der Anschellelemente 20 aufweist, abgezogen. Dabei entsprechen die Längskanten der Scheibe 21 jeweils gerade der Länge der verwendeten Anschellelemente 20. Das an das Tragseil 22 anzuschellende Kabel 23 wird über die Kabelzuführungsvorrichtung 7 zugeführt. Diese Kabelzuführungsvorrichtung 7 enthält mehrere Kabelführungen 15, die auf einem gekrümmten Rahmen 14 angeordnet sind und eine Nut bilden, in welcher das Kabel 23 geführt wird. Diese Kabelführungen 15 sind kantig ausgebildet, so daß sie gleichzeitig als Schmutzabstreifung für das Kabel 23 dienen. Die Krümmung des Rahmens 14 ist so gewählt, daß das Kabel 23 während der Zuführung nicht stärker als zulässig abgebogen wird, so daß ein einwandfreier Knick- bzw. Biegeschutz gegeben ist. Aus dieser Figur geht weiterhin hervor, daß nach der Zusammenführung von Tragseil 22 und Kabel 23 die gemeinsame Kombination Tragseil/Kabel 22-23 den Doppelriemenantrieb 3, der für den Antrieb der Mechanismen sorgt, und die darüber angeordnete Falzvorrichtung 4 für die Anschellelemente 20 durchläuft und die Vorrichtung am Ende mit den Anschellelementen 20 zusammengeklemmt verläßt. Eine Führungsrolle 12 am Ende gewährt besonders beim Rücklauf der Vorrichtung eine sichere Fortbewegung. Mit Hilfe der Freischaltevorrichtung 8, die über einen Hebel 24 mechanisch betätigt wird, kann die Vorrichtung nach dem Einhängen auf dem Tragseil 22 mit den Einhängehilfsvorrichtungen 6 völlig funktionsbereit auf das Tragseil 22 abgesenkt werden, wobei gleichzeitig die kraftschlüssige Berührung zwischen dem Tragseil 22 und den Antriebsmechanismen gewährleistet wird. Schließlich ist noch ein Getriebe 26 angedeutet, das an sich bekannt ist und über welches die Synchronisation der beiden Riemenantriebe und der Rolle 10 erfolgt. Schließlich ist noch eine Tragevorrichtung

0191295
85 P 1084 E

18 in Form von Rohren angedeutet, mit der die Vorrichtung zum Montageort gebracht und angehoben werden kann

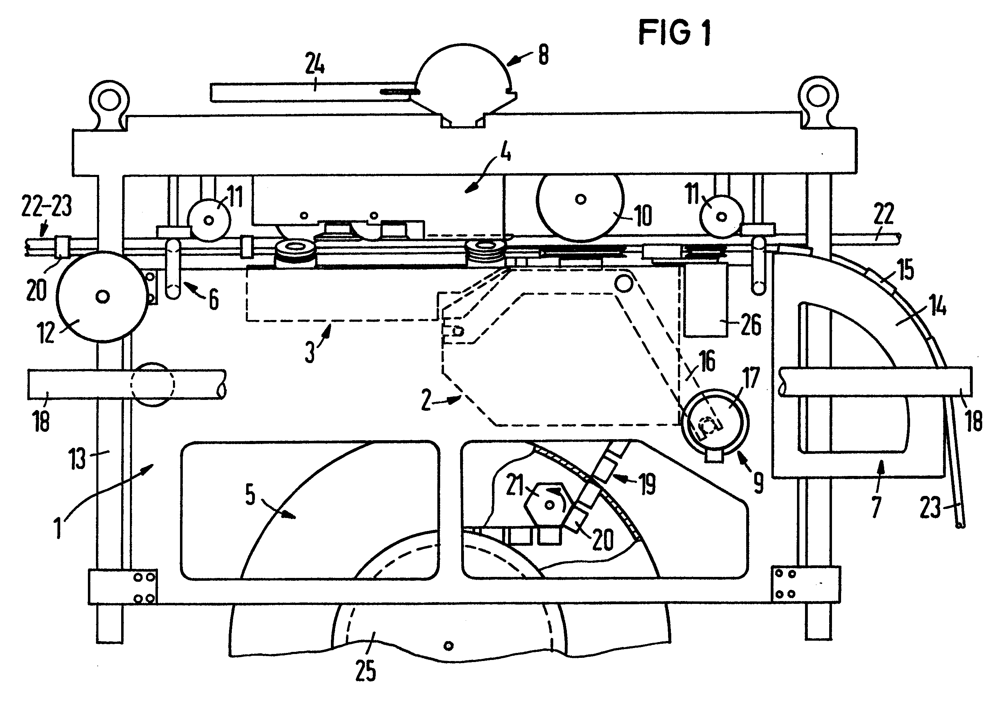

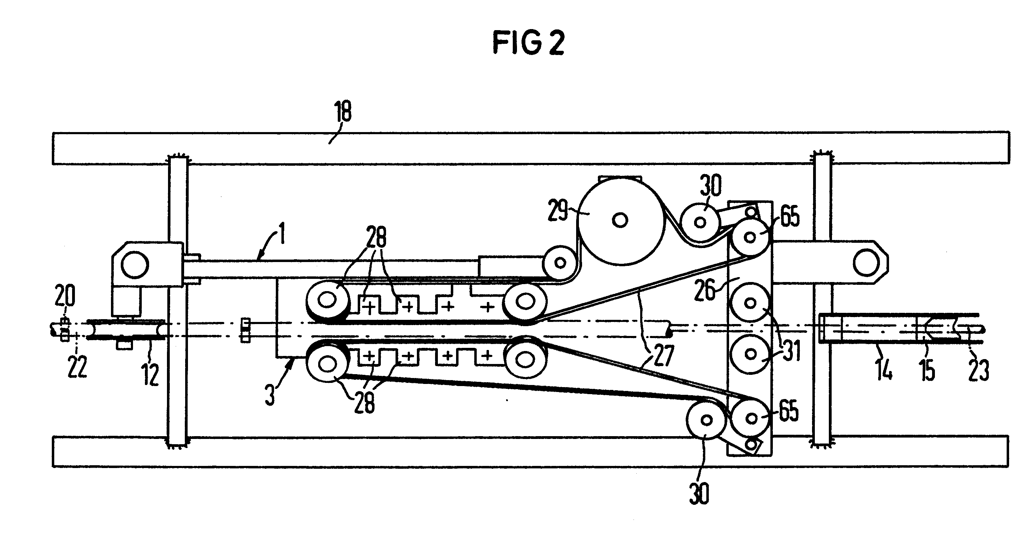

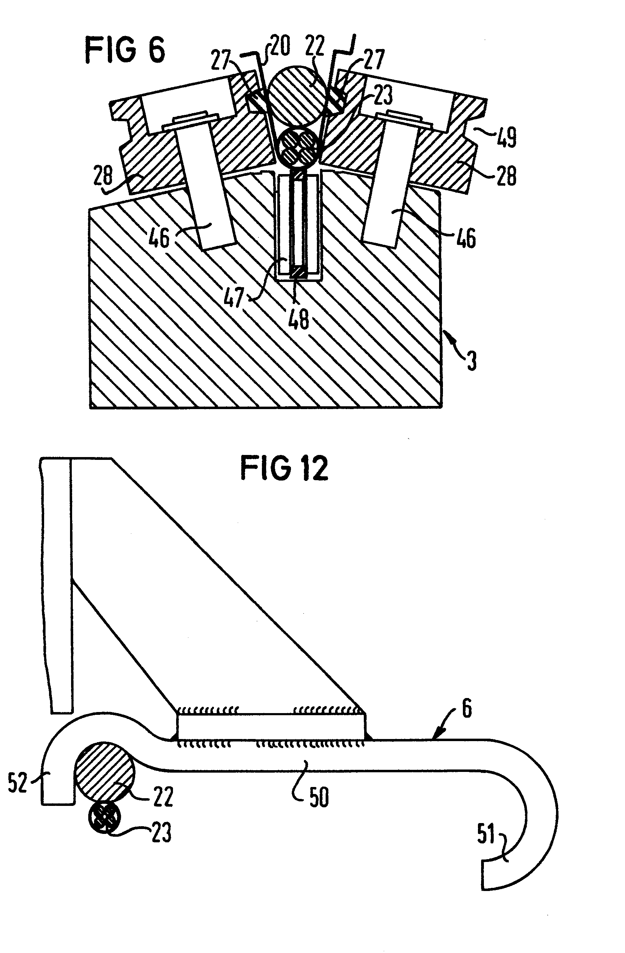

In Figur 2 wird das Prinzip des Doppelriemenantriebes 3 in einer Draufsicht näher erläutert, wobei die oberhalb des Tragseils 22 befindlichen Teile nicht skizziert sind, um eine bessere Übersichtlichkeit bezüglich des Antriebs zu erreichen. Dieser Doppelriemenantrieb 3 besteht im wesentlichen aus zwei einzelnen Riemen 27 die zu beiden Seiten des Tragseils 22 in Nuten 49 (Figur 6) von mehreren hintereinander angeordneten Führungsrollen 28 entlang des Tragseils 22 im angeschalteten Zustand der Vorrichtung 1 kraftschlüssig berührend geführt werden. Beim Fortbewegen der Vorrichtung 1 entlang des Tragseils 22 werden die Riemen 27 infolge der Reibung zum Tragseil 22 mitbewegt, wobei die erforderliche Kraftübertragung durch Umlenkung der Riemen über die Rolle 29 auf das Zuführungsmodul und über die Rollen 65 auf das Getriebe 26 bzw die nachgeschalteten Mechanismen erfolgt. Für die erforderliche Spannung der Riemen 27 sind besondere Spannrollen 30 im Umlauf mit einbezogen, die durch Federkraft jeweils die richtige Spannung bewirken. Weiterhin sind das Tragseil 22 und das anzuschellende Kabel 23 skizziert. Bei letztgenanntem wird der Einlauf über den Zuführungsrahmen 14 deutlich, in dem die nutförmigen Kabelführungen 15 eingelagert sind. Anschließend sind Grobführungsrollen 31 angeordnet, durch die eine Stabilisierung des zugeführten Kabels 23 und eine Ausrichtung zum Tragseil 22 erfolgt. Am Ende der Vorrichtung ist schließlich noch die Führungsrolle 12 gezeigt, über die die fertige Kombination Tragseil/Kabel 22-23 ausläuft. Zur Orientierung der Lage des Doppelriemenantriebes 3 sind lediglich noch die Tragrohre 18 angedeutet.

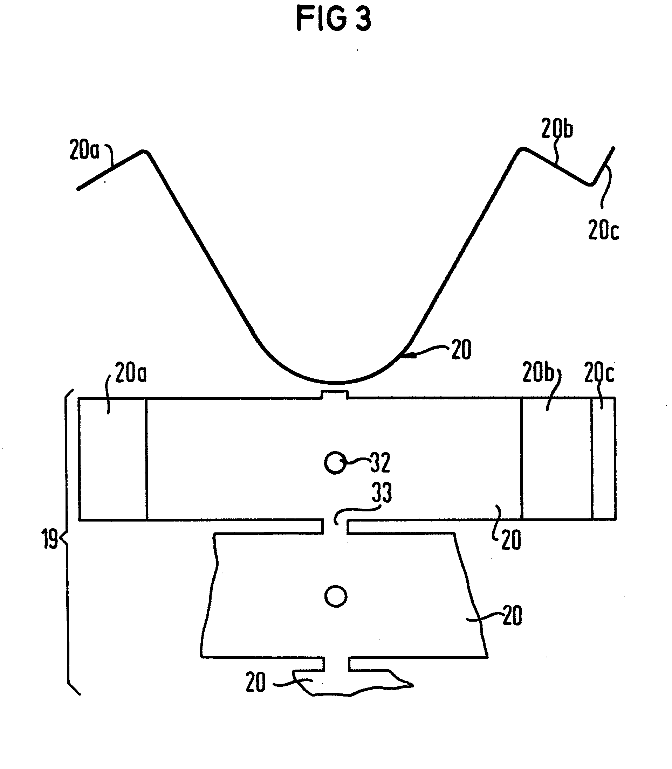

Figur 3 verdeutlicht nun die einzelnen Anschellelemente 20, die in der Vorrichtung verwendet werden, in einer Querschnittsdarstellung im oberen Bereich der Figur und in einer Draufsicht auf diese Anschellelemente 20, die zusammengefaßt sind als bandförmiges Befestigungsmittel 19, wie es aus dem unteren Teilbereich der Figur hervorgeht. In den bogenförmigen Teil des Anschellelementes 20 wird mit Hilfe der Vorrichtung die Kombination Tragseil/Kabel eingesenkt, bzw. das Anschellelement 20 wird durch das Zuführungsmodul 2 von unten her an die Kombination Tragseil/Kabel 22-23 angehoben. Die Enden 20a, 20b und 20c des Anschellelementes 20 sind bereits so vorgebogen, daß sich durch einfache Falzmittel in der Vorrichtung eine klemmende Falzung herstellen läßt. Damit die einzelnen Anschellelemente 20 in rationeller Weise zugeführt werden können, sind sie über schmale Stege 33 aneinandergekettet und schließlich in einem Speicherbehälter aufgetrommelt, von dem sie abgezogen werden. Die Trennnung des bandförmigen Befestigungsmittels 19 in einzelne Anschellelemente 20 erfolgt im Zuführungsmodul 2, wie in der folgenden Figur näher erläutert wird. Für den Transport, sowie für die richtige Positionierung der Anschellelemente 20 im Zuführungsmodul 2, sowie für die Zuführung an die Kombination Tragseil/Kabel 22-23 ist in jedem Anschellelement 20 ein Loch 32 vorgesehen, in welches dann jeweils ein Synchronisierstift 36 eingeführt wird.

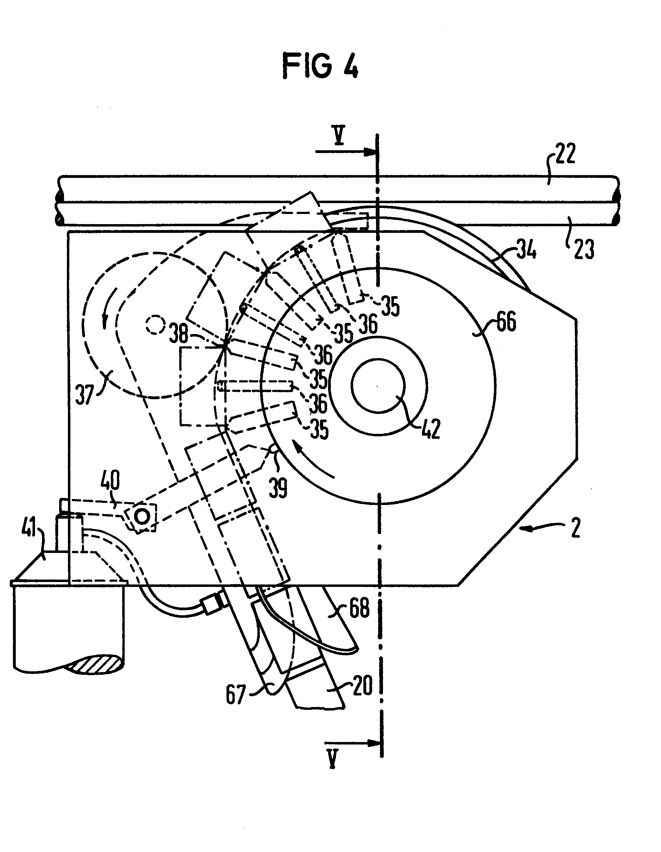

Die Figur 4 zeigt das Zuführungsmodul 2 im Detail. Dieses Zuführungsmodul 2 besteht im wesentlichen aus einem scheibenförmigen Trägerkörper 66 auf dessen äußerem Umfang gleichmäßig verteilt die Trennwerkzeuge in Form von Meißeln 35 angeordnet sind. Diese Meißel 35 dienen im Gegensatz zu bisherigen Methoden dem Abtrennen durch Abscherung und nicht durch Schneiden. Dies bedeutet, daß die Lebensdauer der Trennwerkzeuge wesentlich erhöht wird. Zum Abscheren eines Gegenstandes ist jedoch ein Widerlager erforderlich und dieses Widerlager wird hier durch eine schrittweise rotierende Scheibe 37 aus hartem

0191295
85 P 1084 E

Werkstoff, zum Beispiel aus Stahl, gebildet. Die Abscherung der kettenförmig aneinandergereihten Befestigungsmittel 19 in einzelne Anschellelemente 20 im Bereich ihrer Stege 33 erfolgt nun genau zum Punkt 38, also dann, wenn der entsprechende Meißel 35 senkrecht auf der Umfangsfläche der als Widerlager fungierenden Scheibe 37 steht. Hier ist der Abstand zwischen der Meißelspitze und der Oberfläche des Widerlagers so gewählt, daß eine einwandfreie Abscherung erfolgen kann. Die Anschellelemente 20 werden in zusammenhängender Weise aus dem Speicherbehälter nachgeschoben, wobei sie in einem angepaßten Formspalt innerhalb des Zuführungsmoduls 2 weitergeführt werden. Dieser Formspalt wird von einem der inneren Form des Anschellelementes 20 angepaßten Formstück 67 und einem äußeren Formblech 68 gebildet. Zwischen beiden Formteilen entsteht somit ein Formspalt, der genau dem Anschellelement 20 entspricht und in dem dieses formgerecht bis zur Übergabe an den Doppelriemenantrieb geführt wird. Für den rechten Zeitpunkt des Abtrennens dienen Synchronisierstifte 36, die jeweils zwischen den Meißeln 35 auf dem Umfang des scheibenförmigen Trägerkörpers 66, vorzugsweise in Zwölferteilung, angeordnet sind. Für den Vorschub der Anschellelemente 20 sorgen auch die Meißel 35, die nach außen jeweils eine V-förmige Ausformung besitzen, die hinter die Anschellelemente 20 greifen und diese bei der fortschreitenden Rotation jeweils um einen Schritt weiter befördern. Außerdem wird eine Schmiervorrichtung 41 von der Scheibe 66 aus über Nippel 39 gesteuert, die jeweils nach einer Umdrehung einen kurzen Druck auf einen Schmiermittelbehälter 41 ausübt und dadurch einen entsprechenden Anteil an Schmiermittel an den erforderlichen Stellen, zum Beispiel im Formspalt, absetzt.

Im obersten Bereich des Zuführungsmoduls 2 erfolgt schließlich die Übergabe des jeweils abgetrennten Anschellelementes 20 an den - hier nicht gezeigten - Doppelriemenantrieb, durch den es in die Falzvorrichtung weitergeführt wird.

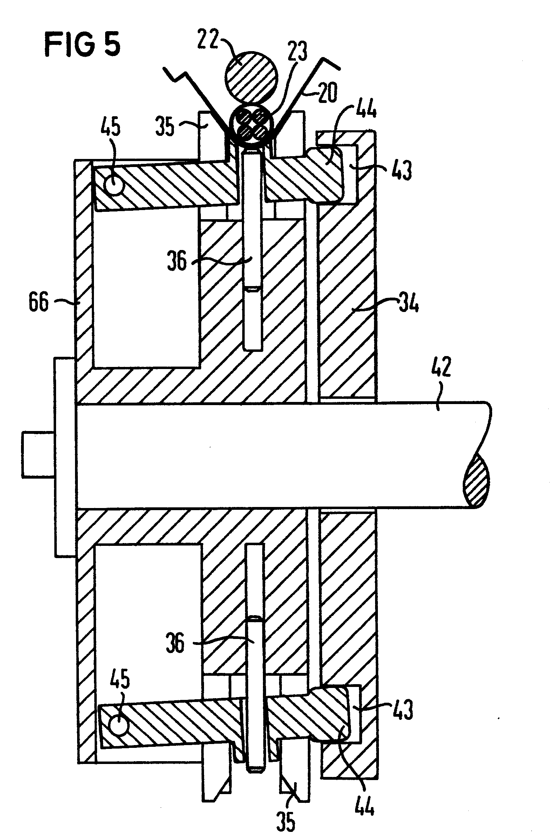

Zur Orientierung der Lage ist die miteinander zu verbindende Kombination Tragseil/Kabel 22-23 angedeutet. Durch
den Schnitt V-V ist die Schnittlinie für die folgende
Figur 5 gekennzeichnet.

Die Figur 5 verdeutlicht mit einem Schnitt durch die
Trommel 66 des Zuführungsmoduls 2 den Aufbau der in der
Trommel 66 gelagerten Hebevorrichtung für die Anschellelemente 20, nachdem sie vom zusammenhängenden Band abgetrennt wurden. Es geht daraus hervor, daß die Anschellelemente 20 durch die Synchronisierstifte 36 bis zur Anhebung geführt sind, wobei diese jeweils in einer Bohrung
der einzelnen Hebel 44 der Hebevorrichtung angeordnet
sind. Die Hebel 44 sind nun parallel zur Achse 42 der
Trommel 66 auf dem äußeren Umfang mit einem Gelenk 45 an
einem Ende drehbar gelagert. Die anderen Enden der Hebel 44 tauchen jeweils in eine Auslenknut 43 einer
parallel zur Trommel 66 angeordneten Auslenkscheibe 34.
Diese Auslenknut 43 ist im Prinzip kreisförmig in der
Auslenkscheibe 34 eingebracht; sie weist jedoch an der
Auslenkstelle für die Anschellelemente 20 eine Auslenkung
zum Rand hin auf, so daß die Hebel 44 der Bewegung ihrer
geführten Enden folgend nach auswärts ausgelenkt werden.
Dies hat zur Folge, daß das oberhalb des ausgelenkten
Hebels 44 befindliche Anschellelement 20 an die darüber
geführte Kombination Tragseil/Kabel 22-23 angehoben wird
und dann zugleich von dem darüber seitlich verlaufenden
Riemen 27 - hier nicht gezeigt - des Doppelriemenantriebs
3 übernommen und weitertransportiert wird. Im unteren Bereich der Trommel 66 wird deutlich, daß der Hebel 44 aufgrund der Auslenknut 43 im eingezogenen Zustand geführt
ist und daß der Synchronisierstift 36 für die Neuaufnahme eines Anschellelementes 20 freiliegt.

0191295
85 P 1084 E

Figur 6 vermittelt mit einem Querschnitt durch den Doppelriemenantrieb 3 im Bereich der Übernahme eines Anschellelementes 20 die Führung der Kombination Tragseil/Kabel
22-23, die im unteren Teil des Doppelriemenantriebs 3
gegen den in einem System aus mehreren gleichen Rollen
47 geführten Keilriemen 48 gedrückt wird, so daß eine eindeutige Lage fixiert ist. Die Kombination Tragseil/Kabel
22-23 wird jedoch auch seitlich zwischen den Riemen 27
des Doppelantriebes 3 kraftschlüssig geführt. Durch den
Kraftschluß erfolgt der Antrieb für die einzelnen Mechanismen. Weiterhin ist ersichtlich, daß das von den beiden Riemen 27 übernommene Anschellelement 20 bereits in
der richtigen Lage zum Anbringen an die Kombination Tragseil/Kabel 22-23 eingeführt ist. Die Riemen 27 werden in
diesem Bereich in Nuten 49 der Rollen 28 geführt, deren
Achsen 46 dem Durchmesserverhältnis von Tragseil 22 und
Kabel 23 entsprechend geneigt sind, um eine optimale Anpassung und damit auch Kraftübertragung zu erreichen.
Der Doppelriemenantrieb 3 ist aus diesem Grunde vorzugsweise auswechselbar, so daß jeweils die dem Durchmesserverhältnis angepaßte Einheit eingesetzt werden kann.

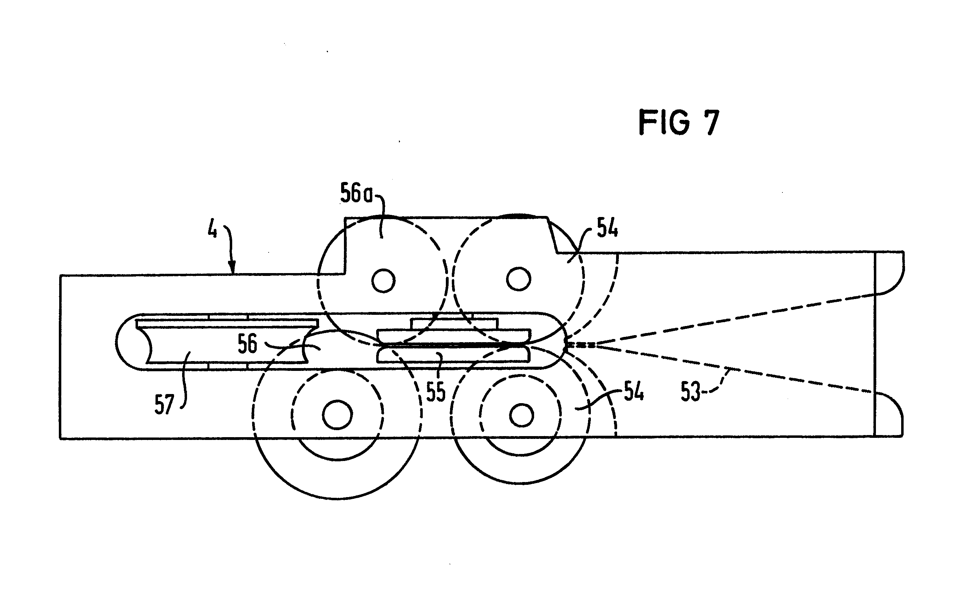

Figur 7 zeigt in einer Draufsicht die Falzvorrichtung 4,
die mit der vorher beschriebenen Einheit des Doppelriemenantriebes 3 zusammenwirkt. Dabei wird das im Doppelriemenantrieb 3 übernommene Anschellelement 20, wie es
in Figur 5 deutlich zu sehen ist, beim Weitertransport
in die Falzvorrichtung 4 durch den keilförmigen Einlauf
53 an den oberen noch offenen Enden 20a und 20b zusammengeführt und somit für den Andruckvorgang, der durch das
erste Andruckrollenpaar 54 ausgeführt wird, vorbereitet.
Nach der Zusammenführung der beiden Enden 20a und 20b,
durch die das Anschellelement entpsrechend gespannt wird,
gelangt das Anschellelement 20 in die Schlitznut 60 einer
Falzrolle 55, wobei hier das längere, noch überstehend
freie Ende des Anschellelementes 20 zurückgefalzt wird.

Im weiteren Verlauf wird der bereits entstandene Falz durch ein Biegerollenpaar 56 seitlich umgebogen und somit vorbereitet für das endgültige Andrücken des Falzes durch eine Anfalzrolle 57. Nach dem Durchlauf dieser Falzvorrichtung 4 ist ein Anschellvorgang beendet und damit beginnt der Ablauf erneut für den im gewählten Abstand nächsten Anschellvorgang. Die Einzelheiten dieser Falzvorrichtung 4 werden nun nachfolgend näher erläutert.

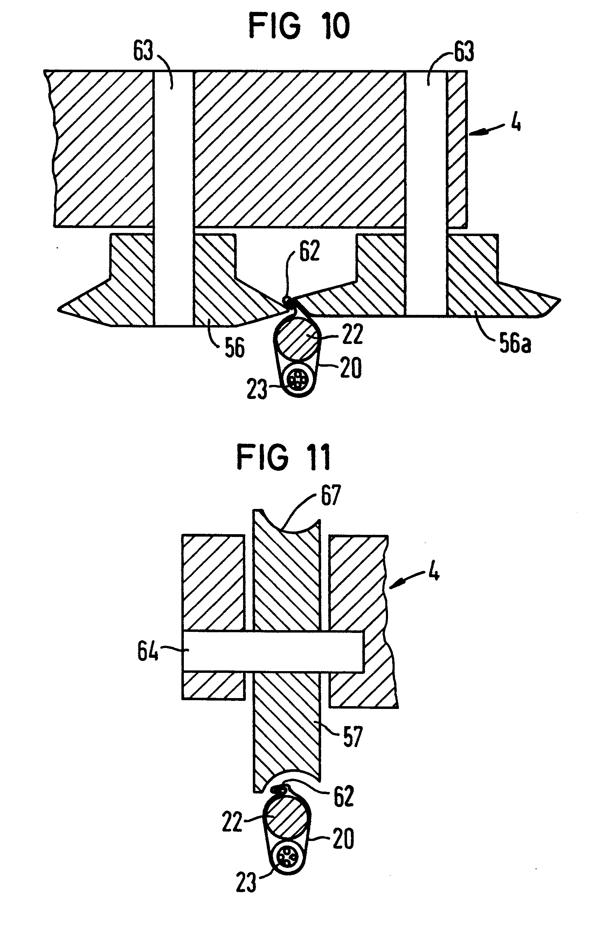

Figur 8 zeigt in einer schematischen Darstellung das Anpressen der beiden Enden 20a und 20b durch die beiden Andruckrollen 54, die mit ihren Achsen 58 senkrecht zur Laufrichtung des Tragseils gelagert sind. Der Übersichtlichkeit halber sind in dieser und in den folgenden Darstellungen alle weiteren Einzelheiten nicht gezeigt. So ist jedoch hier erkennbar, daß das längere Ende 20c des Anschellelementes 20 noch senkrecht von den beiden bereits zusammengedrückten Enden 20a und 20b absteht. Bei dem Zusammendrücken dieser Enden des Anschellelementes 20 erfolgt auch gleichzeitig die Anprägung und Spannung des Anschellelementes 20 an die Kombination Tragseil/Kabel 22-23, wobei durch das Spannen des Anschellelementes 20 und dadurch bewirkter engerer Falzung mit Hilfe der Andruckrolle 54 und des Keilriemens 48 (siehe Figur 6) erhebliche Schwankungen der Durchmesser des Tragseils 22 bzw./und des Kabels 23 ausgeglichen werden.

In Figur 9 wird angedeutet, wie das im vorherigen Vorgang noch senkrecht abstehende Ende 20c des Anschellelementes 20 mit einer Falzrolle 55, die eine umlaufende Schlitznut 60 aufweist, über das erste Ende 20a zurückgefalzt wird. Beim Einlauf des Anschellelementes 20 in die Schlitznut 60 erfährt das freie Ende 20c infolge der abgerundeten Flanke 61 eine Einbiegung und schließlich die Anfalzung an die vorher bereits zusammengedrückten Enden 20a und 20b. Die abgerundete Flanke 61 liegt dabei auf der Seite des noch abstehenden Endes 20c.

Die Figur 10 zeigt den nachfolgenden Vorgang, nämlich das seitliche Abbiegen des bereits ausgebildeten Falzes 62 in eine Schräglage mit Hilfe von zwei Biegerollen 56 und 56a, deren Achsen 63 senkrecht zur Achse 59 der Falzrolle 55 angeordnet sind. Die Ränder der Biegerollen 56 und 56a sind gegensinnig abgeschrägt, so daß zwischen ihnen ein schräg verlaufender Spalt entsteht, in welchen der Falz 62 einläuft. Außerdem sind die beiden Achsen 63 etwas gegeneinander versetzt, so daß die Biegerolle 56a, deren Rand oben breiter ist als unten, den Falz 62 zuerst berührt und ihn seitlich abbiegt. Im weiteren Verlauf wird der Falz 62 im schrägen Spalt zwischen den beiden Biegerollen 56 und 56a weiter verformt und zusammengepreßt.

Die Figur 11 zeigt schließlich den letzten Vorgang, bei dem durch eine Anfalzrolle 57, deren Achse 64 wieder senkrecht zu den Achsen 63 der Biegerollen 56 verläuft, das Anpressen des Falzes 62 erfolgt. Diese Anfalzrolle 57 besitzt am Umfang eine Teilkreisnut 67. Die Höhe dieser Teilkreisnut 67 ist so auf die Kombination Tragseil/Kabel 22-23 mit seinem Anschellelement 20 abgestimmt, daß der Falz 62 vollends niedergepreßt wird. Damit ist der Anschellvorgang beendet und die Kombination Tragseil/Kabel 22-23 verläßt im zusammengeschellten Zustand über eine letzte Führungsrolle 12 hinweg das Gerät.

Die Figur 12 zeigt letztlich noch die Einhängehilfsvorrichtung 6, mit deren Hilfe die Vorrichtung 1 in einfacher Weise vor Beginn des Anschellens auf das Tragseil 22 aufgehängt wird. Diese Einhängehilfsvorrichtung 6, von denen zwei in der Vorrichtung 1 angeordnet sind, besteht aus einem fest an der Vorrichtung 1 verankerten Bügel 50, der an beiden Enden 51 und 52 hakenförmig ausgebogen ist. Dabei ist vorzugsweise das Ende 51 als Fanghaken ausgebildet, während die Hakenform des zweiten Endes 52 etwa der Form, das heißt dem Durchmesser, des Tragseils 22 entspricht. Die Position des Endes 52 stimmt außerdem mit der Lage des Tragseils 22 in bezug auf den weiteren Ablauf, ausgenommen in der Höhe, überein. Man kann nun in unkomplizierter Weise die Vorrichtung 1 mit dem Ende 51 am Tragseil 22 wahllos einhängen und schiebt sie über den geraden Teil des Bügels 50 bis zum zweiten Ende 52 hindurch, wobei eine zusätzliche Auslenkung dieses Endes 52 eine gewisse Rasterung ergibt. Damit ist die Vorrichtung 1 positioniert und kann durch Betätigung der Freischaltevorrichtung 8 einsatzbereit gemacht werden.

9  Patentansprüche
12 Figuren

<u>Patentansprüche</u>

1. Vorrichtung zum Anbringen von Kabeln an Tragseilen, wobei die entlang des Tragseils verfahrbare Vorrichtung einen Vorratsbehälter mit Befestigungsmitteln mitführt, die im Abstand voneinander absetzbar sind und die durch eine Falzvorrichtung aus zu beiden Seiten des Tragseils angeordneten Prägerollen an die miteinander zu verbindende Kombination Tragseil/Kabel anprägbar sind, wobei weiterhin die Befestigungsmittel bandförmig aneinander gefügt und durch eine Trennvorrichtung, die in einem Zuführungsmodul für die Befestigungsmittel angeordnet ist, in einzelne Anschellelemente teilbar sind, d a d u r c h g e k e n n z e i c h n e t , daß die Falzvorrichtung (4) oberhalb des Tragseils (22) angeordnet ist, daß die Falzvorrichtung (4) einen keilförmigen Einlauf (53) für die Anschellelemente (20) aufweist, daß das Zuführungsmodul (2) in der Trennvorrichtung einen Abschermechanismus mit mehreren Meißeln (35) und einer als Widerlager ausgebildeten Gegenrolle (37) aufweist, daß das Zuführungsmodul (2) unterhalb des zu befestigenden Kabels (23) angeordnet ist, daß das Zuführungsmodul (2) freischaltbar ist, daß ein gekoppelter Doppelriemenantrieb (3) für das Zuführungsmodul (2) zu beiden Seiten des Tragseils (22) kraftschlüssig berührend angeordnet ist, daß eine Hebevorrichtung für die Anschellelemente (20) am Ausgang des Zuführungsmoduls (2) angeordnet ist, und daß eine Einhängehilfsvorrichtung (6) angeordnet ist.

2. Vorrichtung nach Anspruch 1, d a d u r c h g e - k e n n z e i c h n e t , daß der Doppelriemenantrieb (3) mit der Tragrolle (10) über ein Synchrongetriebe (26) gekoppelt ist.

3. Vorrichtung nach einem der vorhergehenden Ansprüche, d a d u r c h g e k e n n z e i c h n e t , daß die

0191295
85 P 1084 E

Falzvorrichtung (4) zwei gegenüberliegende im Falzbereich zylindrische Andruckrollen (54), nachfolgend eine Falzrolle (55) mit einer umlaufenden, an einer Flanke (61) abgerundeten Schlitznut (60), deren Achse (59) senkrecht zu den Achsen (58) der Andruckrollen (54) steht, weiterhin zwei Biegerollen (56) mit schräg sich im Falzbereich überdeckenden Profilen, deren Achsen (63) parallel zu den Achsen (58) der Andruckrollen (54) angeordnet sind und schließlich eine Anfalzrolle (57) mit parallel zur Falzrolle angeordneter Achse (64), deren äußerer Rand eine etwa dem Tragseil (22) entsprechende Teilkreisnut (67) aufweist

4. Vorrichtung nach einem der vorhergehenden Ansprüche, d a d u r c h   g e k e n n z e i c h n e t ,   daß die Meißel (35), vorzugsweise zwölf Stück, des Abschermechanismus radial auf dem Rand einer Trommel (66) angeordnet sind, wobei die Abstände der einzelnen Meißel (35) auf dem Umfang der Trommel (66) jeweils der Längsausdehnung der Anschellelemente (20) entsprechen und wobei der jeweilige Abscherpunkt (38) für jedes Anschellelement (20) durch Synchronisierstifte (36) bestimmt ist.

5. Vorrichtung nach einem der vorhergehenden Ansprüche, d a d u r c h   g e k e n n z e i c h n e t ,   daß die Hebevorrichtung aus auslenkbaren Hebeln (44) besteht, die jeweils parallel zur Achse der Trommel (66) auf dem Umfang der Trommel (66) an den Stellen der Synchronisierstifte (36) an der einen Seite über ein Gelenk (45) gelagert und an der zweiten Seite in einer umlaufenden eingesenkten Auslenknut (43) einer Führungsscheibe (34) geführt sind.

6. Vorrichtung nach einem der vorhergehenden Ansprüche, d a d u r c h   g e k e n n z e i c h n e t ,   daß eine Vorratsspule (5) mit Formkern (25) für die bandförmig

0191295

85 P 1084 E

zusammenhängenden Anschellelemente (19) unterhalb des Zuführungsmoduls (2) angeordnet ist und daß die Anschellelemente (20) im Zuführungsmodul (2) in einem Formkanal geführt sind.

7. Vorrichtung nach einem der vorhergehenden Ansprüche, d a d u r c h   g e k e n n z e i c h n e t ,   daß eine vom Zuführungsmodul (2) steuerbare Schmiervorrichtung (41) angeordnet ist.

8. Vorrichtung nach einem der vorhergehenden Ansprüche, d a d u r c h   g e k e n n z e i c h n e t ,   daß Schmutzabstreifevorrichtungen (15) an der Kabelzuführung (7) angeordnet sind.

9. Vorrichtung nach einem der vorhergehenden Ansprüche, d a d u r c h   g e k e n n z e i c h n e t ,   daß die Einhängehilfsvorrichtung (6) aus zwei senkrecht zum Tragseil (22) gerichteten hakenförmigen Bügeln (50) gebildet ist, die in gleicher Höhe etwa am Anfang und am Ende der Vorrichtung (1) fest angeordnet sind, wobei die hakenförmigen Ausformungen der einen Enden (52) etwa dem Durchmesser des Tragseils (22) entsprechen und in der Höhenposition der Tragerollen (11) befestigt sind und daß die Bügel (50) im Betriebsfall, vorzugsweise durch eine Freischaltevorrichtung (8) vom Tragseil (22) freisetzbar sind.

0191295

FIG 1

0191295

FIG 2

0191295

## FIG 3

FIG 4

4/9

0191295

FIG 5

FIG 6

27   20   22   27
23
49
28      28
46   46
47
48
3

FIG 12

6
52
22
50
23
51

0191295

FIG 7

0191295

## FIG 10

## FIG 11